# EUROPÄISCHE PATENTSCHRIFT

(11) **EP 2 979 895 B1**
(45) Veröffentlichungstag und Bekanntmachung des Hinweises auf die Patenterteilung: **23.08.2017**
(21) Anmeldenummer: 14002622.0
(22) Anmeldetag: 28.07.2014
(51) Int. Cl.: B44C 5/04, C09D 5/00, C09D 7/12, B27N 7/00, C08L 1/02, E04F 15/00

(54) **Verfahren zum Herstellen dekorierter Holzwerkstoffplatten und aus der Holzwerkstoffplatte hergestelltes Fußbodenpaneel**
Method for producing decorated wood material boards and floor panel made from the wood material board
Procédé de fabrication de plaques en bois décorées et panneau de plancher fabriqué à partir de celles-ci

(43) Veröffentlichungstag der Anmeldung: 03.02.2016
(73) Patentinhaber: Flooring Technologies Ltd., Pieta PTA 9044 (MT)
(72) Erfinder: Lehmann, Thomas, 16909 Wernikow (DE); Denk, Andre, 16909 Wittstock/Dosse (DE); Oldorff, Frank, 19057 Schwerin (DE)
(74) Vertreter: Rehmann, Thorsten

(56) Entgegenhaltungen:
- EP-A1- 0 499 578
- EP-A1- 2 236 313
- WO-A1-01/81482
- WO-A1-02/100955
- WO-A1-2012/037950
- US-A- 4 430 375

## Beschreibung

Die Erfindung betrifft ein Verfahren zum Herstellen einer dekorierten Holzwerkstoffplatte und ein aus der Holzwerkstoffplatte hergestelltes Fußbodenpaneel. Aus der WO 2012/037950 A1 ist ein Verfahren zum Herstellen von Paneelen mit folgenden Schritten bekannt:
a) Streuen von beleimten Holzfasern oder Holzspänen zu einem Holzwerkstoffkuchen,
b) Verpressen des Holzwerkstoffkuchens unter erhöhtem Temperatureinfluss zu einer großformatigen Trägerplatte, die pressblank bereitgestellt wird und zumindest auf ihrer Oberseite eine bei ihrer Herstellung entstandene Presshaut aufweist,
c) Auftragen einer Grundierung aus einem flüssigen Harz auf Melaminbasis auf die Oberseite der Trägerplatte, wobei das Harz wenigstens teilweise in die obere Randschicht der Trägerplatte hineinpenitriert und den Bereich der Presshaut zumindest teilweise durchdringt und vergütet,
d) Trocknen der Grundierung zu einer Grundierungsschicht,
e) Auftragen wenigstens eines Primers auf die Grundierungsschicht,
f) Trocknen des Primers,
g) Auftragen wenigstens eines mit Farbpigmenten angereicherten, wasserbasierten Lackes auf die getrocknete Primerschicht zur Erzeugung eines Dekors,
h) Trocknen des Dekors zu einer Dekorschicht,
i) Aufbringen einer Versiegelung aus wenigstens einem mit abriebfesten Partikeln und Zellulosefasern angereicherten Harz auf Melaminbasis auf die Dekorschicht,
j) Trocknen der Versiegelungsschicht.

In der EP 2 236 313 A1 wird ein Verfahren zum Herstellen von Paneelen offenbart, die aus einer zuvor beschichteten großformatigen Holzwerkstoffplatte ausgeschnitten werden. Die Holzwerkstoffplatte wird geschliffen, grundiert und mit einem Dekor und einer Versiegelung beschichtet. Die Versiegelung besteht aus wenigstens einem mit abriebfesten Partikeln und Zellulosefasern angereicherten Harz auf Melaminbasis.

Aus der EP 1 454 763 A2 ist ein Verfahren zum Veredeln einer Holz- oder Holzwerkstoffplatte, insbesondere MDF- oder HDF-Platte mit einer Oberseite und einer Unterseite bekannt, bei dem zunächst auf die Oberseite der Platte eine Versiegelungsschicht aus Melaminharz aufgetragen wird, auf die Versiegelungsschicht ein Dekor aufgedruckt und auf das Dekor dann eine Schutzschicht aus Melaminharz aufgetragen wird. Anschließend wird der Aufbau der Platte unter Temperatureinwirkung verpresst, bis die Schutzschicht und die Versiegelungsschicht schmelzen und sich unter Einschluss des aufgedruckten Dekors miteinander verbinden.

In der DE 195 32 819 A1 wird ein Verfahren zur Herstellung einer Holzwerkstoffplatte mit einer optisch gestaltbaren Oberfläche offenbart, bei der auf der Holzwerkstoffplatte nacheinander eine Grundierfärbung, eine Versiegelung, eine Druckbasis und ein Dekordruck aufgebracht werden. Die Druckbasis wird dabei aus einer Grundiereinfärbung beziehungsweise einer Grundierung einer Lackversiegelung und einem Oberflächenlack aufgebaut. Mittels Gravurzylindern kann auf die Druckbasis ein Dekordruck beispielsweise in einem Zwei-Farben-Druck aufgedruckt werden. Auf diesen Druck kann abschließend ein mehrschichtiger Acrylat-UV-Lack aufgebracht werden, der mittels UV-Licht härtbar ist.

Die DE 197 51 115 A1 offenbart ein Verfahren zur Beschichtung eines Paneels, bei dem auf die Oberfläche zumindest eine Farbschicht mittels eines Druckverfahrens, insbesondere mittels Siebdruck, aufgebracht wird. Dabei kann die Oberfläche unbehandelt, geschliffen oder vorbehandelt, insbesondere lackiert sein. Abschließend kann die aufgebrachte Farbschicht durch eine Beschichtung mit Klarlack abgedeckt werden.

Als Grundfarbe wird eine wässrige Druckfarbe auf Basis Eiweißkondensationsprodukte mit anorganischen Pigmenten verwendet, die auf die Grundierung in mehreren Schichten aufgetragen wird. Diese Grundfarbe enthält ca. 50 Prozent Wasser, was nach dem Auftragen wieder herausgetrocknet werden muss. Die einzelnen Schichten der Grundfarbe müssen dünn aufgetragen werden. Bevor die nächste Schicht aufgetragen wird, muss die zuvor aufgetragene Schicht getrocknet werden. Damit sich eine gleichmäßige Grundfarbeschicht einstellt, die als brauchbarer Untergrund für den darauf folgenden Dekordruck verwendet werden kann, müssen bis zu vier Schichten aufgetragen werden. Da jede aufgetragene Schicht getrocknet werden muss, muss hinter dem Auftragsaggregat eine Trocknerstrecke vorgesehen werden.

Üblicherweise wird eine weiße Grundfarbe verwendet, die aus einem Behälter auf eine Auftragswalze gefördert wird. Dann wird über die Walze die Grundfarbe dünn auf die Grundierung aufgetragen. Trotz des sorgfältigen, mehrschichtigen Auftragens, ist die Deckung mit der Grundfarbe inhomogen. Eine Erhöhung des Wassergehaltes in der Grundfarbe verbessert zwar die Farbverteilung, verringert aber gleichzeitig die Deckkraft. Eine Reduzierung des Wassergehaltes erhöht zwar die Deckkraft, verringert aber die Fließfähigkeit der Farbe, was zu einer größeren Inhomogenität führen würde. Hier besteht ein Konflikt zwischen wirtschaftlicher Anlagengröße und angestrebter Ergebnisqualität.

Die Schwierigkeit in diesem Prozess besteht darin, die Grundfarbe möglichst homogen auf die Holzwerkstoffplatte aufzutragen. Für ein zufriedenstellendes Ergebnis müssen bis zu vier Schichten aufgetragen werden, wobei für jede Schicht jeweils eine Auftragswalze und die nachfolgende Trocknerstrecke vorgesehen werden muss. Der notwendige Platzbedarf, die damit verbundenen Kosten und der Energieverbrauch, insbesondere für die Trocknerstrecke, sind sehr hoch.

Zudem muss jedes Auftragsaggregat mit seinen Zuführungen und Abführungen regelmäßig gereinigt werden, da die Grundfarbe, wenn sie mit der Umgebungsluft in Verbindung gelangt, nach kurzer Zeit verkrustet. Die Reinigung des Auftragsaggregats erfolgt manuell. In einer üblichen Fertigungsanlage sind Reinigungsintervalle von zweimal wöchentlich von etwa drei Stunden und einmal monatlich von 24 Stunden vorgesehen. In dieser Zeit steht die gesamte Beschichtungsanlage still und, um vier Auftragsaggregate zu reinigen, werden etwa zehn Leute benötigt, damit die Anlage nach 24 Stunden wieder angefahren werden kann.

Der mit den Wartungsarbeiten verbundene Personalaufwand ist, wie vorstehend erläutert wurde, ebenfalls sehr hoch. Für die Prozessführung erschwerend kommt hinzu, dass die Anlage nach jeder Wartungsarbeit wieder eingefahren werden muss. Auch das Einfahren der Beschichtungsanlage nach ihrem Wiederanfahren ist zeitaufwändig. Das bei der Reinigung der Auftragsaggregate verwendete Reinigungsmittel ist mit der Grundfarbe kontaminiert und muss, um eine Umweltbelastung auszuschließen, als Sondermüll entsorgt werden, was eine weitere Kostenbelastung verursacht.

In der europäischen Patentanmeldung Nr. 14001642.9 ist das Auftragen der Grundfarbe mittels eines Digitaldruckers, insbesondere Tintenstrahldruckers, beschrieben. Eine mit einem Digitaldrucker ausgestattete Fertigungsstraße reduziert den benötigten Platzbedarf, die Wartungsarbeiten und die Umweltbelastung auf ein Minimum. Die Anschaffungskosten für eine derartige Anlage sind hingegen sehr hoch und eignen sich damit üblicherweise nur für kleine, individuelle Losgrößen. Die massenhafte Herstellung großformatiger Trägerplatten ist damit sehr unwirtschaftlich.

Die WO 02/100955 A1 offenbart eine wässrige Latexfarbe, die mit gemahlenen Zellulosepartikeln versehen ist, deren Partikelgröße zwischen 10 und 60 µm betragen kann.

Von dieser Problemstellung ausgehend soll das aus der WO 2012/037950 A1 bekannte Verfahren so verbessert werden, dass die Grundfarbschicht eine gleichmäßige weiße Schicht zur Aufbringung der Dekorfarbe aufweist.

Zur Lösung des Problems ist vorgesehen, dass die Grundfarbe Mikrozellulosepartikel mit einem Durchmesser von 0,1 bis 10 µm enthält und die Grundfarbe und diese Mikrozellulosepartikel zusammen als Dispersion aufgetragen werden, und dass vor dem Auftrag des Dekors auf die Grundfarbschicht ein Primer, der Mikrozellulosepartikel mit einem Durchmesser von 0,1 bis 10 µm enthält, aufgetragen wird.

Die Mikrozellulose kann der Grundfarbe unmittelbar vor dem Auftragen - also beim Plattenhersteller - beigemischt werden.

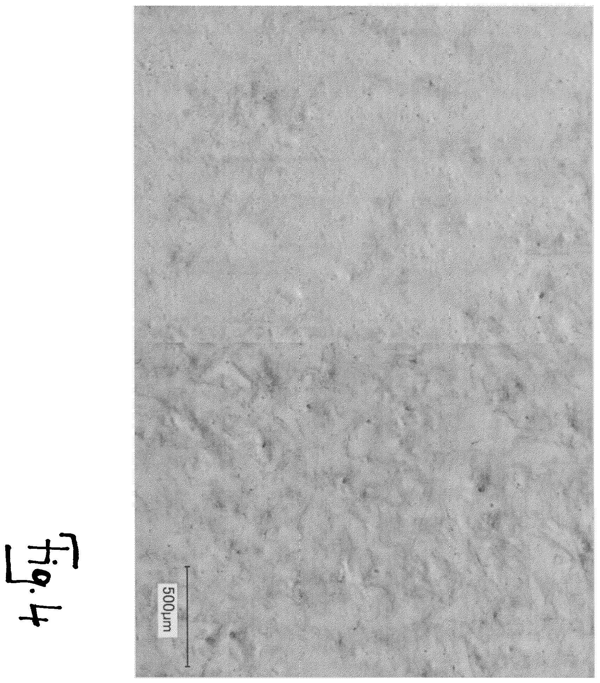

Durch diese Ausgestaltung des Verfahrens ist es möglich, die benötigte Menge an Grundfarbe zu verringern und zudem eine homogenere Grundfarbschicht aus der Grundfarbe, ohne Helligkeitsverluste im Weißgrad, zu erzeugen. Ebenfalls wird die Oberflächenrauigkeit der Grundfarbschicht reduziert, also ihre Oberflächenqualität erhöht, was für die spätere Bedruckung von Vorteil ist. Dies ist der Figur 4 entnehmbar, die einen Vergleich der Oberflächen nach dem dritten Auftrag einer weißen Grundfarbe mit einem Anteil von 3 % Mikrozellulose (linke Bildhälfte) und ohne Mikrozellulose (rechte Bildhälfte) zeigt. Insbesondere von Vorteil ist, dass die bestehende Fertigungsanlage nicht für den Einsatz der Mikrozellulose umgerüstet werden muss.

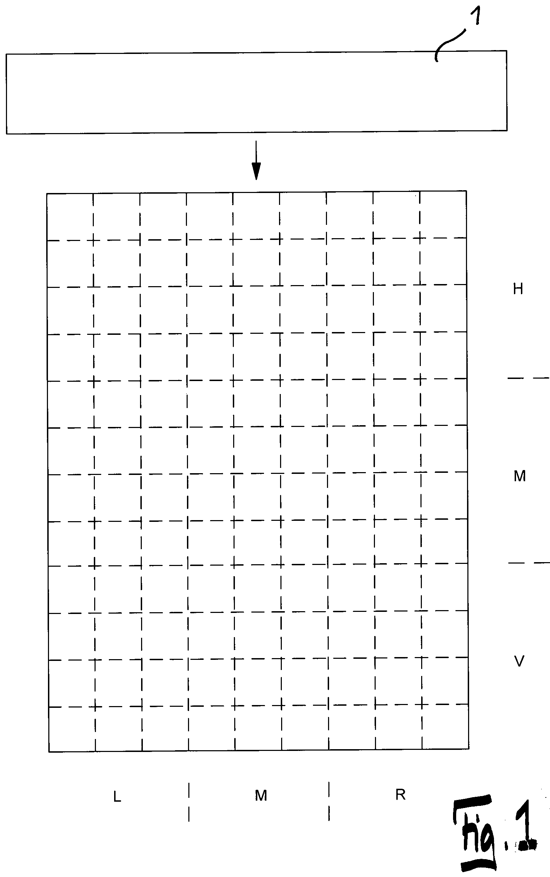

Der nachfolgenden Tabelle ist die Erhöhung der Helligkeitswerte einer weißen Grundfarbe mit einem Anteil von 3 % Zellulose im Vergleich zu derselben weißen Grundfarbe ohne Zellulose entnehmbar. Die Messpunkte sind dabei über der gesamten Platte verteilt angeordnet. Die Messpunkte sind in Figur 1 angedeutet (H - Hinten, M - Mitte, V - Vorne, R - Rechts, L - Links).

| | H4 | H3 | H2 | H1 | M4 | M3 | M2 | M1 | V4 | V3 | V2 | V1 |
|---|---|---|---|---|---|---|---|---|---|---|---|---|
| R1 | 0,4 | 0,4 | 0,7 | 0,8 | 0,3 | 0,7 | 0,4 | 0,3 | 0,4 | 0,7 | 0,4 | 0,3 |
| R2 | 1,0 | 0,3 | 0,6 | 0,6 | 0,8 | 0,9 | 0,6 | 0,7 | 0,8 | 0,8 | 1,0 | 0,6 |
| R3 | 0,8 | 0,8 | 0,8 | 0,7 | 1,2 | 0,9 | 0,7 | 0,6 | 0,7 | 0,6 | 1,1 | 0,8 |
| M1 | 0,6 | 1,0 | 0,9 | 1,1 | 1,0 | 1,0 | 0,7 | 1,3 | 1,0 | 1,1 | 1,2 | 0,9 |
| M2 | 0,7 | 0,4 | 0,4 | 0,8 | 0,4 | 0,7 | 0,6 | 0,8 | 0,8 | 0,5 | 1,0 | 1,1 |
| M3 | 0,7 | 0,4 | 0,5 | 0,8 | 0,6 | 0,4 | 0,5 | 0,4 | 0,9 | 0,3 | 0,9 | 0,7 |
| L1 | 0,7 | 0,6 | 0,1 | 0,7 | 0,6 | 0,4 | 0,6 | 0,7 | 0,4 | 0,7 | 0,8 | 0,4 |
| L2 | 0,4 | 0,2 | 0,5 | 0,1 | 0,1 | 0,5 | 0,4 | 0,4 | 0,6 | 0,6 | 0,4 | 0,4 |
| L3 | 0,5 | 0,8 | 0,9 | 0,4 | 0,8 | 0,5 | 1,2 | 0,8 | 0,6 | 0,2 | 0,7 | 0,4 |

Für die Beurteilung der Helligkeit einer Platte mit einer herkömmlichen weißen Grundfarbschicht und einer Platte mit einer erfindungsgemäßen Grundfarbschicht wurde der L-Wert gemessen, der im L*a*b-Farbraum die Helligkeit ("Lightness") beschreibt. Der L-Wert liegt in einem Wertebereich von 0 bis 100. Ist L = 0, ist die Farbe schwarz, ist L = 100, ist die Farbe weiß. Für die Bestimmung der Helligkeit wurde das portable Farbmessgerät EXACT STANDARD der Firma X-RITE verwendet. Für die Helligkeitsmessung wurde eine große Platte (Breite = 207 cm, Länge = 280 cm) in 108 gleiche Teile unterteilt (vgl. Figur 1), an denen der L-Wert gemessen wurde. Zunächst wurden fünf herkömmliche Platten vermessen und für jeden Messpunkt ein Mittelwert L_{Hi} aus diesen fünf ermittelten Messwerten errechnet. Anschließend wurden fünf mit einer erfindungsgemäßen Grundfarbschicht versehene Platten entsprechend vermessen und der Mittelwert L_{Ei} gebildet. Die obige Tabelle zeigt die Differenz der gemittelten Helligkeitswerte L_{Ei} der erfindungsgemäßen Platten mit den Helligkeitswerten L_{Hi} herkömmlicher Platten. Da die Differenz positiv ist, also L_{Ei} - L_{Hi} > 0, ergibt sich, dass an allen Testpunkten eine Erhöhung des L-Wertes um ca. 0,65 L eingetreten ist, was eine Erhöhung der Helligkeit einer erfindungsgemäß beschichteten Platte gegenüber einer herkömmlichen Platte bedeutet.

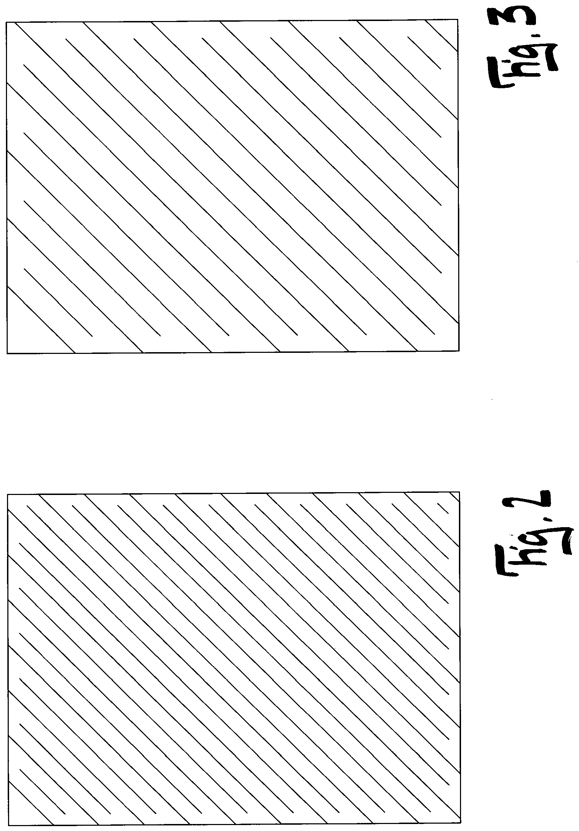

Figur 1 verdeutlicht die Messmethode. Die Platte 2 wird in Transportrichtung T unter dem Auftragswerk 1 hindurchgefördert, von dem die Grundfarbe (herkömmlich oder erfindungsgemäß) aufgetragen wird. Anschließend werden die L-Werte an den 108 Messpunkten ermittelt. Figuren 2 und 3 verdeutlichen den Unterschied. Figur 2 repräsentiert einen Messpunkt an einer Platte mit herkömmlicher Grundfarbschicht (dunklerer L_{Hi}-Wert) und Figur 3 repräsentiert einen Messpunkt einer Platte mit erfindungsgemäßer Grundfarbschicht (größerer L_{Ei}-Wert). Die unterschiedlichen Helligkeiten sind auch Figur 4 entnehmbar.

Vorzugsweise wird die im Pressverfahren entstandene Presshaut vor dem Auftragen der Grundierung an- oder abgeschliffen. Die Presshaut muss an- oder abgeschliffen werden, weil in ihrem Bereich der Wärmeeintrag beim Heißpressen so hoch ist, dass der Klebstoff zu schnell aushärtet, wodurch Leimbrücken wenigstens teilweise brechen und die aufgetragene Schicht anfällig machen. Dieses Brechen der Leimbrücken macht fertige Paneele anfällig gegen Anhebungen der auf der Trägerplatte aufgebrachten dekor- und abriebfesten Schichten. Diese Abhebungen werden Delaminierung genannt, die bereits bei normaler Belastung und aus der für Holzwerkstoffe typischen Größenänderung aufgrund von Klimaschwankungen auftreten kann.

Die Mikrozellulosepartikel werden vorzugsweise in einer Konzentration von 0,5 bis 3,0 Gewichtsprozent der Grundfarbe beigemischt. Versuchsergebnisse zeigen, dass diese Konzentrationen zu einer Verringerung der Viskosität der Grundfarbe führen. Bei identischer Temperatur der Farbe liegt der Wert etwa um 20% niedriger. Dies bewirkt eine homogenere Verteilung der Grundfarbe bei konstanter Deckkraft, wodurch die benötigte Farbmenge um ca. 10% reduziert werden kann. Die Beschichtung mit Dispersion beträgt etwa 8,5 g/m².

Die Mikrozellulosepartikel weisen einen durchschnittlichen Durchmesser von vorzugsweise 8 µm auf. Sie liegen, bevor sie der Grundfarbe beigemischt werden, als trockenes Pulver vor. Der Ausgangsstoff ist hochreine Zellulose mit einem Zellulosegehalt von ca. 99,5%. Ein derartiges Produkt wird handelsüblich als ultrafeine Zellulose bezeichnet, wobei für Versuche das Markenprodukt mit der Bezeichnung ARBOCEL UFC M 8 der Firma J. Rettenmaier & Söhne, 73494 Rosenberg, Deutschland, verwendet wurde. Die Zufuhr der Zellulose in Form einer wässrigen Lösung, eines Gels oder einer Paste ist ebenso denkbar.

Das Auftragen der Grundfarbe inklusive der Mikrozellulose erfolgt vorzugsweise in nur einem einzigen Schritt. Dabei soll auch nur eine einzige Schicht aufgetragen werden. Der Bauaufwand für eine entsprechende Fertigungsanlage wird dadurch deutlich reduziert. Insgesamt wird der Produktionsprozess somit nicht nur vereinfacht, sondern enorm verbilligt, was in der reduzierten Größe der Fertigungsanlage sowie der benötigten Materialmenge begründet liegt. Die Dispersion kann auch in mehreren Schritten, insbesondere in vier Schritten aufgetragen werden. Jede einzelne Schicht wird dabei vor dem Auftrag einer weiteren Schicht getrocknet. Auch ist es möglich, nicht alle Einzelschichten zu trocknen, sondern nass-in-nass aufzutragen, wobei es durchaus denkbar ist, dass die erste Schicht vor dem Auftrag der zweiten Schicht getrocknet wird, während die dritte Schicht auf die nasse zweite Schicht aufgetragen wird, die dritte Schicht wieder getrocknet wird und die vierte Schicht auf die trockene dritte Schicht aufgetragen wird. Auch ist eine andere Reihenfolge denkbar.

Auf die Grundfarbschicht wird ein Primer als Druckbasis für das Dekor aufgetragen. Durch die erhöhte Oberflächenqualität/Verringerung der Oberflächenrauigkeit der Grundfarbschicht, weil die Mikrozellulose die oberflächlich befindlichen Poren ausfüllt, kann die Auftragsmenge des Primers verringert werden. Weitere Material- und Kosteneinsparungen sind eine unmittelbare Folge. Der Primer enthält auch Mikrozellulosepartikel der vorgenannten Art und Größe und kann als Dispersion aufgebracht werden. Das Dekor kann im Tiefdruckverfahren oder mittels eines Digitaldruckers, insbesondere eines Tintenstrahldruckers, aufgebracht werden.

Ein Fußbodenpaneel bestehend aus einem Kern aus einer aufgeteilten Holzwerkstoffplatte, die nach dem beschriebenen Verfahren hergestellt wurde, ist durch folgende Merkmale gekennzeichnet:
a) einer Oberseite, einer Unterseite, und zwei Paar gegenüberliegende Seitenkanten,
b) die Oberseite und die Unterseite des Kerns weisen zumindest Teile einer beim Verpressen entstandenen Presshaut auf,
c) zumindest auf die Presshaut auf der Oberseite sind eine Grundierschicht, wenigstens eine weiße Grundfarbschicht mit Mikrozellulosepartikeln, wenigstens eine Dekorschicht und eine abriebfeste Schicht aufgebracht,
d) diese Mikrozellulosepartikel weisen einen Durchmesser von 0,1 bis 10 µm, vorzugsweise durchschnittlich 8 µm, auf,
e) zwischen der Grundfarbschicht und der Dekorschicht ist ein Primer vorgesehen, der Mikrozellulosepartikel mit einem Durchmesser von 0,1 bis 10 µm enthält
f) auf der Unterseite des Kerns ist eine Grundierschicht und eine Gegenzugschicht aufgebracht,
g) die Grundierschicht ist teilweise in die Presshaut an der Oberseite eingedrungen,
h) an den gegenüberliegenden Seitenkanten sind Verbindungs- und Verriegelungsmittel zum leimlosen Verbinden mehrerer Paneele miteinander vorgesehen.

Das Auftragen der Dekorschicht wird über Druckwalzen in mehreren Schritten oder über einen Digitaldrucker, insbesondere einen Tintenstrahldrucker, realisiert.

## Patentansprüche

1. Verfahren zum Herstellen von dekorierten Holzwerkstoffplatten mit folgenden Schritten:
a) Streuen von beleimten Holzfasern oder Holzspänen zu einem Holzwerkstoffkuchen,
b) Verpressen des Holzwerkstoffkuchens unter erhöhtem Temperatureinfluss zu einer Trägerplatte, die pressblank bereitgestellt wird und zumindest auf einer ihrer Oberseiten eine bei ihrer Herstellung entstandene Presshaut aufweist,
c) Auftragen einer Grundierung aus einem flüssigen Harz auf Melaminbasis auf die vorzugsweise unbehandelte Presshaut der Oberseite der Trägerplatte, wobei das Harz wenigstens teilweise in die obere Randschicht der Trägerplatte hineinpenetriert und dabei die Presshaut zumindest teilweise durchdringt und vergütet,
d) Trocknen der Grundierung zu einer Grundierungsschicht,
e) Auftragen wenigstens einer weißen Grundfarbe auf die Grundierungsschicht,
f) Trocknen der Grundfarbe zu einer Grundfarbschicht,
g) Auftragen wenigstens eines mit Farbpigmenten angereicherten, wasserbasierten Lackes auf die getrocknete Grundfarbschicht zur Erzeugung eines Dekors,
h) Trocknen des Dekors zu einer Dekorschicht,
i) Aufbringen einer Versiegelung aus wenigstens einem mit abriebfesten Partikeln und Zellulosefasern angereicherten Harz auf Melaminbasis auf die Dekorschicht,
j) Trocknen der Versiegelungsschicht, wobei die Grundfarbe Mikrozellulosepartikel mit einem Durchmesser von 0,1 bis 10 µm enthält und eine Dispersion aus Grundfarbe und diesen Mikrozellulosepartikeln auf die Grundierungsschicht aufgetragen wird, und wobei vor dem Auftrag des Dekors auf die Grundfarbschicht ein Primer, der Mikrozellulosepartikel mit einem Durchmesser von 0,1 bis 10 µm enthält, aufgetragen wird.

2. Verfahren nach Anspruch 1, **dadurch gekennzeichnet, dass** diese Mikrozellulosepartikel in die Grundfarbe eingemischt werden.

3. Verfahren nach Anspruch 1, **dadurch gekennzeichnet, dass** die Presshaut vor dem Auftragen der Grundierung teilweise zumindest abgeschliffen wird.

4. Verfahren nach Anspruch 1 oder 2, **dadurch gekennzeichnet, dass** die Mikrozellulosepartikel in einer Konzentration von 0,1 bis 3,0 Gew.-% in die Grundfarbe gemischt werden.

5. Verfahren nach Anspruch 1 oder 2, **dadurch gekennzeichnet, dass** die Mikrozellulosepartikel einen durchschnittlichen Durchmesser von 8 µm aufweisen.

6. Verfahren nach einem der vorstehenden Ansprüche, **dadurch gekennzeichnet, dass** die Dispersion in nur einer einzigen Schicht aufgetragen wird.

7. Verfahren nach einem der Ansprüche 1 bis 5, **dadurch gekennzeichnet, dass** die Dispersion in vier Schichten aufgetragen wird und jede Schicht vor dem Auftrag einer weiteren Schicht getrocknet wird.

8. Paneel aus einer Holzwerkstoffplatte, hergestellt nach einem der vorstehenden Ansprüche, mit den Merkmalen:
a) einer Oberseite, einer Unterseite und zwei Paar gegenüberliegende Seitenkanten,
b) die Oberseite und die Unterseite des Kerns weisen zumindest Teile einer beim Verpressen entstandenen Presshaut auf,
c) zumindest auf die Presshaut auf der Oberseite sind eine Grundierschicht, wenigstens eine weiße Grundfarbschicht mit Mikrozellulosepartikeln, wenigstens eine Dekorschicht und eine abriebfeste Schicht aufgebracht,
d) diese Mikrozellulosepartikel weisen einen Durchmesser von 0,1 bis 10 µm, vorzugsweise durchschnittlich 8 µm, auf,
e) zwischen der Grundfarbschicht und der Dekorschicht ist ein Primer vorgesehen, der Mikrozellulosepartikel mit einem Durchmesser von 0,1 bis 10 µm enthält,
f) auf der Unterseite des Kerns ist eine Grundierschicht und eine Gegenzugschicht aufgebracht,
g) die Grundierschicht ist teilweise in die Presshaut an der Oberseite eingedrungen,
h) an den gegenüberliegenden Seitenkanten sind Verbindungs- und Verriegelungsmittel zum leimlosen Verbinden mehrerer Paneele miteinander vorgesehen.

## Claims

1. Process for the production of decorated wood-composite boards with the following steps:
a) scattering of glued wood fibres or wood chips to give a wood-composite cake,
b) pressing of the wood-composite cake with exposure to elevated temperature to give a core board, which is produced in press-finished condition and, at least on one of its upper sides, has a press skin that has arisen during production of the said board,
c) application of a basecoat made of a melamine-based liquid resin to the preferably untreated press skin of the upper side of the core board, where the resin penetrates at least to some extent into the upper peripheral layer of the core board and thus at least to some extent passes into the press skin and improves the quality thereof,
d) drying of the basecoat to give a basecoat layer,
e) application of at least one white base colour to the basecoat layer,
f) drying of the base colour to give a base colour layer,
g) in order to produce a decorative effect, application, to the dried base colour layer, of at least one water-based lacquer enriched with colour pigments,
h) drying of the decorative effect to give a decorative layer,
i) application, to the decorative layer, of a sealing system made of at least one melamine-based resin enriched with abrasion-resistant particles and with cellulose fibres,
j) drying of the sealing layer,
where the base colour comprises microcellulose particles with diameter from 0.1 to 10 µm and a dispersion made of base colour and of these microcellulose particles is applied to the basecoat layer, and where,
before the application of the decorative effect to the base colour layer, a primer is applied which comprises microcellulose particles with diameter 0.1 to 10 µm.

2. Process according to Claim 1, **characterized in that**, these microcellulose particles are incorporated by mixing into the base colour.

3. Process according to Claim 1, **characterized in that**, before the application of the basecoat, the press skin is to some extent at least subjected to removal by grinding.

4. Process according to Claim 1 or 2, **characterized in that**, the concentration in which the microcellulose particles are mixed into the base colour is from 0.1 to 3.0% by weight.

5. Process according to Claim 1 or 2, **characterized in that**, the average diameter of the microcellulose particles is 8 µm.

6. Process according to any of the preceding claims, **characterized in that**, the dispersion is applied in only a single layer.

7. Process according to any one of Claims 1 to 5, **characterized in that**, the dispersion is applied in four layers and each layer is dried before the application of a further layer.

8. Panel made of a wood-composite board, produced according to any of the preceding claims, with the following features:
a) an upper side, an underside and two pairs of opposite lateral edges,
b) the upper side and the underside of the core have at least portions of a press skin that has arisen during the pressing process,
c) the following have been applied at least to the press skin on the upper side: a basecoat layer, at least one white base colour layer with microcellulose particles, and at least one decorative layer and one abrasion-resistant layer,
d) the diameter of these microcellulose particles is from 0.1 to 10 µm, preferably on average 8 µm,
e) provided between the base colour layer and the decorative layer there is a primer which comprises microcellulose particles with diameter from 0.1 to 10 µm,
f) applied on the underside of the core there is a basecoat layer and a counterbalancing layer,
g) the basecoat layer has penetrated to some extent into the press skin on the upper side,
h) provided at the opposite lateral edges there are means of connection and of interlocking for the connection of a plurality of panels to one another with no use of glue.

## Revendications

1. Procédé de fabrication de plaques décorées en matériau à base de bois, comprenant les étapes suivantes consistant à :
a) répandre des fibres de bois ou des copeaux de bois encollé(e)s pour former un gâteau de matériau à base de bois,
b) presser le gâteau de matériau à base de bois sous l'influence d'une température accrue pour former une plaque de support qui est mise à disposition à l'état pressé nu et qui présente une peau de pressage résultant de sa fabrication sur l'une au moins de ses faces supérieures,
c) appliquer une couche de fond en résine liquide à base de mélamine sur la peau de pressage de préférence non traitée de la face supérieure de la plaque de support, la résine pénétrant au moins partiellement dans la couche marginale supérieure de la plaque de support et traversant et affinant au moins partiellement la peau de pressage,
d) faire sécher la couche de fond pour former une couche de fond de base,
e) appliquer au moins une peinture de base blanche sur la couche de fond de base,
f) faire sécher la peinture de base pour former une couche de peinture de base,
g) appliquer au moins une laque aqueuse enrichie de pigments colorants sur la couche de peinture de base séchée pour réaliser un décor,
h) faire sécher le décor pour former une couche à décor,
i) appliquer sur la couche à décor un scellement en au moins une résine à base de mélamine enrichie de particules résistantes à l'abrasion et de fibres de cellulose,
j) faire sécher la couche de scellement,
dans lequel
la peinture de base comprend des particules de microcellulose ayant un diamètre de 0,1 à 10 µm, et on applique une dispersion constituée de peinture de base et de ces particules de microcellulose sur la couche de fond de base, et avant d'appliquer le décor sur la couche de peinture de base, on applique un apprêt qui comprend des particules de microcellulose ayant un diamètre de 0,1 à 10 µm.

2. Procédé selon la revendication 1, **caractérisé en ce que** l'on mélange ces particules de microcellulose dans la peinture de base.

3. Procédé selon la revendication 1, **caractérisé en ce que** l'on enlève par ponçage au moins partiellement la peau de pressage avant d'appliquer la couche de fond.

4. Procédé selon la revendication 1 ou 2, **caractérisé en ce que** l'on mélange les particules de microcellulose à une concentration de 0,1 à 3,0 % en poids dans la peinture de base.

5. Procédé selon la revendication 1 ou 2, **caractérisé en ce que** les particules de microcellulose présentent un diamètre moyen de 8 µm.

6. Procédé selon l'une des revendications précédentes, **caractérisé en ce que** l'on applique la dispersion en une unique couche.

7. Procédé selon l'une des revendications 1 à 5, **caractérisé en ce que** l'on applique la dispersion en quatre couches et on fait sécher chaque couche avant d'appliquer une autre couche.

8. Panneau d'une plaque en matériau à base de bois, fabriquée selon l'une des revendications précédentes, présentant les caractéristiques suivantes :
a) une face supérieure, une face inférieure et deux paires d'arêtes latérales opposées l'une à l'autre,
b) la face supérieure et la face inférieure du noyau présentent des parties au moins d'une peau de pressage résultant du pressage,
c) une couche de fond, au moins une couche de peinture de base blanche à particules de microcellulose, au moins une couche à décor et au moins une couche résistante à l'abrasion sont appliquées au moins sur la peau de pressage, sur la face supérieure,
d) ces particules de microcellulose présentent un diamètre de 0,1 à 10 µm, de préférence 8 µm en moyenne,
e) entre la couche de peinture de base et la couche à décor est prévu un apprêt qui contient des particules de microcellulose ayant un diamètre de 0,1 à 10 µm,
f) une couche de fond de base et une couche à contre-traction sont appliquées sur la face inférieure du noyau,
g) la couche de fond de base est pénétrée partiellement dans la peau de pressage sur la face supérieure,
h) sur les arêtes latérales opposées, des moyens de liaison et de verrouillage sont prévus pour la liaison sans colle de plusieurs panneaux.
